# EUROPÄISCHE PATENTANMELDUNG

(11) **EP 0 591 895 A2**
(43) Veröffentlichungstag der Anmeldung: **13.04.1994**
(21) Anmeldenummer: 93116006.3
(22) Anmeldetag: 04.10.1993
(51) Int. Cl.: C04B 18/20, C04B 32/00, C08J 11/06

(54) **Bau-, Versatz- bzw. Füllstoff**

(30) Priorität: 05.10.1992 DE 4233334; 06.10.1992 DE 4233600; 19.10.1992 DE 4235032; 12.11.1992 DE 4238152; 04.03.1993 DE 4306755; 27.03.1993 DE 4310090; 27.04.1993 DE 4313706; 17.05.1993 DE 4316418; 14.06.1993 DE 4319634; 02.07.1993 DE 4322013; 16.07.1993 DE 4323865; 30.07.1993 DE 4325595; 06.09.1993 DE 4330084
(71) Anmelder: Hölter, Heinz, Prof. Dr. Sc., Dr.-Ing., D-45964 Gladbeck (DE)
(72) Erfinder: Hölter, Heinz, Prof. Dr. Sc., Dr.-Ing., D-45964 Gladbeck (DE)
(74) Vertreter: Spalthoff, Adolf, Dipl.-Ing.

(57) **Zusammenfassung**

Ein Bau-, Versatz- bzw. Füllstoff ist vorzugsweise zum Einsatz im untertägigen Bergbau bestimmt und enthält einen Kunststoffanteil.

In Versuchen hat sich herausgestellt, daß der für den Bau-, Versatz- bzw. Füllstoff verwendete Kunststoffanteil aus Rest- bzw. Abfallkunststoffen hergestellt werden kann, ohne daß der Bau-, Versatz- bzw. Füllstoff nachteilige Eigenschaften aufwiese.

## Beschreibung

Die Erfindung bezieht sich auf einen Bau-, Versatz- bzw. Füllstoff, der vorzugsweise im untertägigen Bergbau zum Einsatz kommen soll. Als eine Teilkomponente enthält dieser Bau-, Versatz- bzw. Füllstoff einen Kunststoffanteil.

Ein derartiger Bau-, Versatz- bzw. Fullstoff muß, um im untertägigen Bergbau wirtschaftlich eingesetzt werden zu können, vergleichsweise wenig aufwendig und wenig kostenintensiv sein.

Der Erfindung liegt die Aufgabe zugrunde, einen derartigen Bau-, Versatz- bzw. Füllstoff zur Verfügung zu stellen, der in ausreichenden Mengen verfügbar ist und bei dessen Herstellung vergleichsweise geringe Kosten anfallen.

Diese Aufgabe wird erfindungsgemäß dadurch gelöst, daß als Kunststoffanteil Rest- bzw. Abfallkunststoff vorgesehen ist. Derartige Rest- bzw. Abfallkunststoffe fallen in Recyclinganlagen in ausreichendem Ausmaß an. Darüber hinaus können u.U. für die Entsorgung derartiger Rest- bzw. Abfallkunststoffe Einnahmen erzielt werden, so daß ein einen entsprechenden Kunststoffanteil enthaltender Bau-, Versatz- bzw. Füllstoff wirtschaftlich sinnvoll eingesetzt werden kann.

Bei einem Verfahren zur Entsorgung und wirtschaftlichen Nutzung von Reststoffen aus industriellen Recyclingprozessen werden schmutzbehaftete Reststoffe aus industriellen Recyclingprozessen mit einer zweiten Reststoffgruppe zusammengebracht.

Unter Reststoffe industrieller Recyclingprozesse versteht man u.a. Kunststoffe, geshredderten Automobilschrott usw.

Erfindungsgemäß wurde gefunden, daß diese Reststoffe, wie insbesondere Shredder-Reststoffe aus der Automobilindustrie, die als zu entsorgende Stoffe bzw. als Weichshredder bezeichnet werden, wie Kunststoffe, Autositze, Kabelreste, insbesondere Umhüllungen, aus denen wertvolles Kupfer oder andere Buntmetalle herausgeholt wurden, mit der Salzlauge aus Aufbereitungsprozessen in Kali- und Salzbergwerken eine Dochtwirkung ausüben und eine innige Verbindung ergeben, die dazu ausreicht, um weiterhin zum Beispiel Abraumsalze aus dem Salzbergbau oder ähnliche Salzrückstände oder ähnliche Ab-. baurückstände aus anderen Bergbaubereichen zusammenzuführen und als Baustoffmischungen für das Verfüllen von Hohlräumen im Kali- und/oder Salzbergbau zu nutzen.

Die Pumpeigenschaften und die Abbindefähigkeit sind durch die entsprechenden Shredderrückstände zu der Salzlauge und den Abraumrückständen steuerbar.

Reststoffe, die bevorzugte Dochtwirkungseigenschaften haben, werden mit Abraumsalzlaugen zusammengebracht, die durch diese Dochtwirkung aufgenommen werden, um sie dann mit anderen Reststoffen so zusammenzubringen, daß sie a) eine pumpfähige Masse ergeben und b) mit Zusatz von weiteren Bindestoffen und/oder Abraumgestein aus der Kali- und Salzgewinnung einen Baustoff ergeben, der als Füllstoff gut gebräuchlich ist.

Dieser Baustoff wird spezifisch für den Kali- und/oder Salzbergbau genutzt, wobei das geogene Umfeld den Formationen der Hauptträger des oben beschriebenen gefundenen Baustoffes entspricht.

Bedingt durch die Abbau- bzw. Aufbereitungsmethode im Kali- und Salzbergbau entstehen hoch salzhaltige Endlaugen, die bisher zum überwiegenden Teil als Abwasser in die Flüsse geleitet wurden.

Diese Entsorgungspraxis steht der neuen Umweltgesetzgebung entgegen.

Ein hydraulischer Baustoff, der Filteraschen aus Verbrennungsanlagen, die in ihrer Zusammensetzung sowohl als Zuschlag- wie als Zusatzstoff dienen und der ferner Zement und Kalkhydrat als Bindemittel enthält, bindet ab, wenn er mit der oben beschriebenen Salzlauge statt mit Wasser angemacht wird.

Ein solcher Baustoff besteht beispielsweise aus 1000 l Endlauge, 600 bis 700 kg Filterasche, 200 bis 300 kg Kalkhydrat und 200 bis 300 kg Zement, wobei die damit erzielbaren Festigkeiten den Anforderungen eines Versatzbaustoffes für den Kali- und Salzbergbau entsprechen.

Es werden Untertage Baustoffe mit Zuschlägen und/oder Armierungen aus Kunststoffen und/oder kunststoffhaltigen Materialien verwendet.

Im Falle eines angrenzenden Grubenbrandes können durch die starke Erhitzung hieraus saure Schadgase wie HCl, HF, SO2, NO2 und CO2 entweichen. Diese sind nicht nur gesundheitsschädigend für das vor Ort arbeitende Personal, sondern setzen auch empfindliche Meßgeräte und Sicherheitswarngeräte außer Funktion.

Saure Gase der genannten Art können durch alkalische Medien chemisch gebunden werden.

Es wird vorgeschlagen, zur Vermeidung der oben genannten Risiken und Gefährdungen den Baustoffen feste alkalische Komponenten in einer bezogen auf die freisetzbaren sauren Schadstoffe überstöchiometrischen Menge zuzumischen, die in der Lage sind, die im Falle einer Erwärmung des Baustoffes austretenden sauren Schadstoffe zu sorbieren.

Mit herkömmlichen Bindemitteln hergestellte Füll- und Versatzmaterialien für die untertägige Hohlraumverfüllung werden bei nachfolgender Einwirkung saurer Grubenwässer zerstört. Die Auflösung beruht auf einer Wechselwirkung der üblicherweise alkalischen Bindekomponente Zement mit Wässern niedriger pH-Werte. Die Folge sind randliche Auflösung, Penetration und schließlich Auslaugung des verfüllten Baustoffkörpers.

Mischungen aus recycleten Kunststoffgranalien als Zuschlag mit einer Bindekomponente aus Magnesiabinder sowie einem Zusatz an plastischem kaolinitischen Ton widerstehen einem solchen Angriff weitgehend. Hierbei kann die Bindekomponente dem Chemismus des Grubenwassers weitgehend angepaßt werden, indem bei chloridhaltigen sauren Wässern die Hauptbindekomponente aus MgO + MgCl2 und bei sulfatführenden Wässern aus MgO + MgSO4 besteht, wordurch ein Anionenaustausch vermieden wird.

Durch Zusatz von quellfähigem kaolinitischen, d.h. weitgehend kationenfreien Ton wird darüber hinaus der Baukörper effektiv gegen eindringendes Wasser abgedichtet.

Somit wird ein für die untertägige Hohlraumverfüllung entwickeltes Versatzmaterial aus recycleten Kunststoffgranalien als Zuschlag und einer Bindekomponente aus Magnesiabinder geschaffen, das durch Zusatz von quellfähigem, vorwiegend kaolinitischen Ton einen aus diesem Baustoff hergestellten Baukörper wirksam gegen eindringende saure Grubenwässer abzudichten vermag.

Bei Verwendung einer hydraulischen Bindung aus Zement anstelle des Magnesiabinders besitzt der Tonzusatz auch hier eine vergleichbare abdichtende Wirkung gegen eindringende saure Grubenwässer auf den abgebundenen Baukörper und ist imstand, diesen so wirksam gegen einen chemischen Angriff zu schützen.

Die für die Gebirgsmechanik erforderlichen elastischen und plastischen Deformationseigenschaften des Baukörpers sind besonders günstig, wenn das als Zuschlag verwendete Kunststoffgranulat eine Korngröße kleiner 1 mm besitzt.

Schlacken aus Müllverbrennungsanlagen können erhebliche Mengen an brennbaren Bestandteilen (ca. 5 % - 30 % Kohlenstoff) enthalten.

Dieser Kohlenstoff ist auch gleichzeitig Träger von Dioxinen und Furanen sowie Schwermetallen.

Eine Verwertung dieser Schlacken ist daher nicht möglich, und es verbleibt die Deponierung. Diese Schlacken sind aber nicht eluatfest und gefährden bei Sturm das Umfeld. Aufgrund dieser Tatsache ist man zu der Überzeugung gekommen, diese Schlacken bis zur Verglasung zu schmelzen. Diese geschieht bei etwa 1000 Grad C.

Das bedeutet, daß die Verglasung etwa 1000 DM pro Tonne Schlacke kostet.

In der Bundesrepublik werden Millionen Tonnen Müll verbrannt werden müssen bei bis zu einem Anfang von ca. 20 % Schlackenrückständen ( = ca. 8 Millionen Tonnen Schlackenanfall). Werden diese 8 Millionen Tonnen Schlacken verglast werden müssen, bedeutet das dann einen Kostensatz von 8 Millionen DM.

Dieses ist volkswirtschaftlich fast untragbar.

Über Brecher aufbereitete Schlacken mit hohem Kohlenstoffanteil, der sich entzünden könnte und mit Dioxinen und Furanen belastet ist, werden in eine salzhaltige (NaCl/KCl) Masse eingehüllt, die nicht brennbar und unschädlich für das Nebengestein z.B. im Salzbergbau eingebettet werden kann.

Diese Schlacken, die erhebliche Schwierigkeiten bereiten, werden mit den bei der bergmännischen Salzgewinnung anfallenden Rückständen so vermischt, daß sie nicht zünd- und entgasungsfähig umweltgerecht als Baustoff und/oder Versatzstoffe zum Füllen von Hohlräumen dienlich sind. Dadurch werden gleichzeitig Tagesbrüche und Konvergenzen gemindert. Bevorzugt für die Anwendung des Verfahrens werden Gruben, die nicht wasserführend sind.

Kunststoffrückstände aus der Verpackungsindustrie sind teilweise mit Chemikalien und/oder auch an- oder organischen Rückständen, wie z.B. Trinkbechern, Flaschen oder auch Shredderrückständen, belastet.

Diese Rückstände sind bisher entweder gewaschen und in Recycling-Systemtechnologien so aufbereitet worden, daß sie wieder einer Verwendung zugeführt werden können.

Jedoch sind hier nur nach dieser bekannten Technologie geringe prozentuale Rückstände wiederverwertbar zu gestalten.

Der Rest wird bisher deponiert oder aber, es wird versucht, diese Rückstände in Füllstoffe für Bergbaubereiche einzubringen.

Die große Schwierigkeit liegt
a) in der Zerkleinerung,
b) es muß der Gärungsprozeß unterbunden werden,
c) es muß die elektrostatische Aufladung unterbunden werden,
d) der Kunststoff muß preßbar gestaltet werden, so daß er mit möglichst geringen Transportkosten belastet, den Mischbereichen der Füllstoff- oder Baustoffherstellung zugeführt werden kann.

Um dieses machbar zu gestalten, wird vorgeschlagen, daß die Kunststoffe gesammelt, zerkleinert und mit Neutralisationsmitteln, vorzugsweise Kalk, so keimfrei gestaltet werden, vorzugsweise über einen Mischvorgang, daß sie ohne Geruchsbelästigung und Freisetzen von Dunst- und Gasentwicklungen gepreßt und transportiert werden können.

Es ist bekannt, daß Kunststoffe gewaschen werden. Aber das Waschen und das anschließende Trocknen der Kunststoffe ist sehr kostenaufwendig.

Aus diesem Grunde wird vorgeschlagen, die Kunststoffe so, wie sie anfallen, mit Kalk oder ähnlichen Neutralisationsmitteln zu mischen, um sie dann in erfindungsgemäße Preßcontainer einzugeben, die diese Kunststoffe dort so verpressen, daß sie von ihrer geringen Schüttdichte auf ein Gewicht von größer Gamma = 0,3 gepreßt werden.

Es ist wichtig, daß auch die elektrostatische Aufladung neutralisiert wird, um einen späteren Transport nach dem Entleeren aus dem Preßcontainer zu gewährleisten.

Diese Preßcontainer werden bevorzugt im "Huckepack"-Verfahren von der Füllstelle zum Güterbahnhof oder Schiffstransport gebracht und von dort aus dann bis zum Verwendungsort ohne Straßenbelastung transportiert.

Das Verfahren ist weiterhin dadurch gekennzeichnet, daß nach dem Transport über Schiene, Wasser und/oder Straße am Empfangsort diese gefüllte Masse aus dem Preßcontainer herausgedrückt wird und einer Lockerungseinrichtung zugeführt wird, nämlich einem Schneckenbetrieb mit Druckluftzersetzung der gepreßten Masse, um diese dann einem Mischbehälter mit vorzugsweise flüssiger Substanz und den entsprechenden Bindestoffen, die das notwendige Endprodukt besitzt, zuzuführen.

Der Altkunststoff wird in Verbindung mit anderen Restprodukten, z.B. Lebensmittelresten, so aufbereitet, daß er a) nicht mehr statisch aufgeladen und b) nicht mehr in einen Gärungsprozeß übergeleitet wird, um dann über einen Preßcontainer zum Verwendungsort transportiert zu werden und hier über Lockerungseinrichtungen, die mit Druckluft zusätzlich beschickt werden, in einen naßtechnischen Prozeß mit Bindestoffen zwangsweise eingeführt zu werden, und dieser aufbereitete Kunststoff dann in der Regel bereits schon eine spezifische Wichte von Schüttgewicht größer 0,3 besitzt.

Bei der Herstellung sowie bei der Verarbeitung von Baustoffen aus recycleten Materialien führen Verunreinigungen im Bindemittel und/oder Zuschlagstoff und/oder Zusatzmittel oft zu unerwünschten Nebenreaktionen während des Abbindevorganges.

Dies ist insbesondere dann bedenklich, wenn durch diese Begleitreaktionen gasförmige Produkte entstehen, die gesundheitsschädlich und, soweit sie brennbar sind, auch sicherheitsgefährdend sein können. Hierdurch wird insbesondere eine Verwendung solcher Baustoffe im Untertage-Einsatz unmöglich gemacht.

Während die Intensität der erzeugten gasförmigen Produkte von der Menge der Verunreinigungen abhängig ist, hängt die Dauer der Reaktion von der Partikelgröße sowie der Umgebungstemperatur ab.

Da in sehr vielen Fällen weder die Anwesenheit noch die Partikelgröße der verunreinigenden Stoffe beeinflußt werden können, wird vorgeschlagen, während des Anmischvorganges, d.h. mit Beginn des kritischen Reaktionsverlaufs, die Reaktionstemperatur im Mischaggregat soweit zu erhöhen, daß innerhalb des normalen Mischzyklus die Gasbildung abgeschlossen ist, wobei die gasförmigen Produkte durch die mechanische Beanspruchung des Mischvorganges selber ausgetrieben sind.

Bei einem derartigen Verfahren treten sehr häufig insoweit Schwierigkeiten auf, als Aluminiumreste am Kunststoff anhaften, z.B. bei Milchverpackungen, wo Aluminiumdeckel grundsätzlich kunststoffkaschiert vorhanden sind. Diese führen zwangsläufig bei der Zusammenführung mit alkalischen Bindemitteln zu Wasserstoffbildungen.

Um diese Gefahr der Wasserstoffbildung beim Einsatz im Untertagebergbau zu vermeiden, werden folgende Maßnahmen vorgeschlagen:

Während des Mischvorganges, d.h., beim Ansetzen von Baustoffmischungen, die z.B. Zement, Sand und den Zuschlagstoff Kunststoff mit anhaftendem Aluminium enthalten, werden, vorzugsweise in der Naßphase, die Bindemittel einem heizbaren Mischgefäß zugführt. Das Anmachwasser wird vorher erwärmt. Die so zusammengefügten Bindemittel werden unter Einwirkung der Reaktionstemperatur und der sich entsprechend der notwendigen Ausgasungszeit ergebenden Dauer des Mischvorgangs, wobei diese Ausgasungszeit den Kaschierungen von Kunststoff und Aluminium, z.B., entspricht, solange gemischt, daß die Ausgasung bei Wasserstoff restlos beendet ist und somit der Baustoff gefahrlos im Untertagebergbau und/oder auch im Hochbau als Leichtbaustoff verwendet werden kann.

Reststoffe, wie beispielsweise aus Siedlungs- oder Industriemüll aussortierte Kunststoffe, die für eine Wiederverarbeitung zu Gebrauchsartikeln nicht mehr verwendbar sind, können als Zuschlag für Baustoffe verarbeitet werden.

Reststoffe solcher Art haben oft den Nachteil, daß sie herkunftsbedingt metallische Verunreinigungen enthalten.

Soweit es sich um magnetisch abscheidbare Metalle wie Eisen, Nickel und Kobalt handelt, sind diese, insbesondere in zerkleinerter Form, leicht durch starke Magnetabscheider abtrennbar.

Andere metallische Bestandteile, wie beispielsweise Kupfer, Aluminium, Zink usw., können dagegen nur in aufwendigen und recht teuren Verfahren mit Wirbelstrommagneten entfernt werden.

Der Nachteil einiger metallischer Verunreinigungen besteht nun darin, daß sie, sofern es sich um amphoter reagierende Metalle wie Zink und Aluminium handelt, in basisch angemachten Baustoffen unter Freisetzung von Wasserstoff reagieren und aufgelöst werden.

Ein weiterer Nachteil bei der Verarbeitung der eingangs erwähnten Reststoffe besteht darin, daß sie organische Verunreinigungen enthalten, die über mikrobielle Zersetzungs- und Gärungsvorgänge zu Fäulnis führen, was bei der Lagerung und Verarbeitung zu Geruchsbelästigung und Gesundheitsschädigung des Arbeitspersonals führen kann.

Beide Nachteile, sowohl die bei der endgültigen Verarbeitung entstehende Gasentwicklung wie auch die bei der Zwischenlagerung und Verarbeitung auftretende Geruchsbelästigung und Gesundheitsgefährdung durch die oben erwähnten Fäulnisvorgänge, können dadurch behoben werden, daß die Reststoffe aus Kunststoff während des ohnehin nach der Sortierung notwendigen Waschvorganges mit einer Waschflüssigkeit behandelt werden, welche sowohl die metallische Auflösung und die damit verbundene Wasserstoffentwicklung wie auch die mikrobiell bedingten Fäulnisvorgänge derart günstig beeinflußt, daß die zur Wasserstoffbildung führenden Metalle aufgelöst und die die Fäulnis bedingten Mikroorganismen abgetötet werden.

Dies wird erfindungsgemäß dadurch erreicht, daß für den Waschvorgang eine alkalische Flüssigkeit mit einem pH-Wert > 12 verwendet wird. Hierdurch wird einerseits erreicht, daß die Wasserstoffentwicklung vorweggenommen und andererseits die Fäulnisbildung durch Abtötung der Mikroorganismen vermieden wird.

Bei dem Verfahren zur Vorbehandlung von Kunststoff-Restmaterial, das mit organischen und amphoter reagierenden Metallrückständen verunreinigt ist, bilden die letzteren in alkalisch reagierenden Baustoffmischungen unter Auflösung der Metalle gasförmigen Wasserstoff.

Diese Vorbehandlung nimmt dabei die in den angemachten Baustoffen ablaufende Reaktion vorweg.

Hierbei hat sich nun gezeigt, daß die Reaktionszeit bis zur vollständigen Auflösung der Metalle sowie auch zur Vernichtung des organischen Materials drastisch verkürzt werden kann, wenn die Vorbehandlung mit den alkalischen Waschlösungen bei erhöhter Temperatur, vorzugsweise bei 60 bis 90 Grad C, durchgeführt wird, wobei die unmittelbar hinter dem Herstellungsprozeß des Kunststoffgranulats in diesem noch vorhandene Eigenwärme aus dem Prozeß ausgenutzt wird, indem das noch heiße Granulat in die Waschlösung eingebracht wird.

In weiteren Verfahrensschritten wurde gefunden, daß die Vorbehandlung durch Temperatur und Laugung der Kunststoffe noch einmal erheblich reduziert werden kann, wenn die Kunststoffe zuvor einer nach dem Prinzip der Schwertrübeflüssigkeit arbeitenden Zentrifuge zugeführt werden, die eine weitgehende Separierung der Aluminiumpartikel ermöglicht und damit die Zeit und den Aufwand für die Laugung der Erhitzung der Kunststoffe zum Zwecke der Wasserstoffausgasung entsprechend herabsetzt.

Magnesium bildet mit Chlorid und Sulfat basische Salze, die z.B. dem Verbindungstyp Mg2 OCl2 und Mg2 OSO4 entsprechen. Auf dieser Tatsache beruht z.B. die Verwendung von Mischungen aus Magnesiumchlorid, Mg Cl2, und Magnesiumoxid, MgO, als sog. Magnesiabinder im Estrichbau, wobei Sand als Zuschlag verwendet wird, ferner bei der Schachtabdichtung im Salzbergbau sowie in Verbindung mit Korkmehl, Holzspänen usw. als sog. Steinholz, Xylolith.

Bei all diesen Rezepturen werden außer der wasserlöslichen Komponente Mg Cl2, welches mit dem wasserunlöslichen MgO reagiert, sowie dem ebenfalls wasserunlöslichen jeweiligen Zuschlag keine weiteren wasserlöslichen Salze zugesetzt oder toleriert, da diese nicht nur das Abbindeverhalten stören, sondern bei dem jeweiligen Verwendungszweck zu Auslaugungen, Ausblühungen usw. führen würden.

Es wurde überraschend gefunden, daß hoch Mg Cl2-haltige Ablauge, die als Abfallprodukt bei der bergmännischen Kalisalzgewinnung anfällt und die außer Mg Cl2 noch bis zu 80 g/l Natriumchlorid, NaCl, und Kaliumchlorid, KCl, enthält, ebenfalls mit Magnesiumoxid, MgO, reagiert, indem die anfangs sehr dünnflüssigen Suspensionen aus Salzlauge und MgO je nach dem in weiten Bereichen variierbaren Verhältnis von Mg Cl2 : MgO unterschiedlich schnell ansteifen, jedoch spätestens nach 15 Stunden eine Festigkeit erreichen, die der eines Gipsbinders entspricht.

Der Vorteil dieses Bindemittels besteht nun darin, daß es für die Einbindung von in Salzbergwerken eingelagerten Industrieabfällen verwertet werden kann, indem ein aus dem vorbeschriebenen Binder sowie einem als inerter Zuschlagstoff dienenden industriellen Rückstand frisch angemachter Bau- oder Füllstoff direkt in die zu verfüllenden Hohlräume von stillgelegten Salzbergwerken im Gieß- oder Spritzverfahren eingebracht werden kann, ohne daß es durch die dazu notwendige "Anmachflüssigkeit" zum Auflösen des aus wasserlöslichem Salz bestehenden Nebengesteins kommt, wie es bei nur mit Wasser angemachten üblichen zement- oder gipsgebundenen Baustoffen der Fall wäre, da die als Anmachflüssigkeit dienende Salzlauge mit den wasserlöslichen Komponenten des Nebengesteins bereits gesättigt ist.

Ferner hat sich überraschend gezeigt, daß eine Plastizitätsverbesserung des aus dem oben beschriebenen Bindesystem sowie einem inerten Zuschlagstoff bestehenden Baustoffs durch Zugabe kleiner Mengen plastischer Tone mit hohem Ionenaustauschvermögen möglich ist.

Dies ist insofern erwähnenswert, als daß die Salzlauge wechselnde aber nicht unbeträchtliche Mengen Kalium- und Natriumionen enthält, welche normalerweise durch ihre hohe Ionenaustauschfähigkeit gegenüber Tonmineralien die Plastizität eines Tones verschlechtern.

Diese Tatsache kann daher genutzt werden, um bei einem hohen Füllgrad des Baustoffes die sich dadurch verschlechternden rheologischen Eigenschaften nicht nur zu kompensieren, sondern sogar noch gegenüber den Eigenschaften eines Baustoffs mit niedrigem Füllgrad zu verbessern.

Diese Eigenschaft befähigt nun den Baustoff, trotz hohen Füllgrades über größere Strecken durch Rohrleitungen gepumpt werden zu können, was in vielen Fällen die einzige Möglichkeit für eine Untertageverbringung ist.

Stoffe mit niedriger Wärmeleitfähigkeit werden als Zuschlag für Isolierbaustoffe verwendet.

Andererseits werden Kunststoffe, die aus der Verpackung stammen, gesammelt und teilweise gewaschen, getrocknet, zerkleinert und wieder in dem normalen Fertigungsprozeß zum Herstellen von Hohlkörpern oder Festkörpern genutzt.

Weiterhin werden Kunststoffe gesäubert und zerkleinert in Bergbaubaustoffen zur Armierung verwendet. Die Granulate sind fest und körnig und eignen sich somit nicht besonders gut als Zuschlag von Leichtbaustoffen mit Isoliereigenschaft.

Kunststoffe aus dem Rücklauf der Altkunststoffsammlung werden durch Waschen vorgereinigt, um sie dann mit Zuführung von Wärme zu desinfizieren. Dies kann dadurch geschehen, daß der Kunststoff heiß im schmelzflüssigen Zustand durch Zuspeisen eines Gases während eines Extrusionsverfahrens gebläht wird, wie es beispielsweise bei der Herstellung von geschäumten Kabeln durch Kaskadenextrusion angewendet wird. Weiterhin wird vorgeschlagen, daß durch zusätzliche Verwendung von eingeblasener Luft und/oder Gas ein Hohlkörper entsprechend notwendiger Größe erzeugt werden kann.

Durch anschließendes Zerkleinern des Extrudats kann so ein Leichtzuschlag beliebiger Korngröße hergestellt werden. Insbesondere kann das Extrudat als dünne, nadelartige Strangstücke geschnitten werden, wodurch sie, ähnlich wie Stahlnadeln, Kunststoffasern usw. als innere Armierung eines Baustoffs dienen können.

Abfallkunststoffe werden somit wärmetechnisch so behandelt, daß sie einen Leichtstoffcharakter bekommen.

Sand- und/oder Kiesgruben werden, wenn sie erschöpft sind, in der Regel zu Tümpelgebieten. Vielfach werden diese Gruben auch als Deponiegruben verwendet. Die Grundwassergefährdung ist vielfach dadurch gegeben.

Da Kies- und/oder Sandgruben vielfach in Wassergewinnungsgebieten liegen und aus diesem Grunde als Frischwassereinzugsgebiet erhalten bleiben sollen, wird vorgeschlagen, die ausgesandeten oder ausgekiesten Hohlräume mit eluatfestem Material zu verfüllen und vorzugsweise an der Oberfläche Wachstumsboden aufzulagern.

Um die alte Frischwasser- oder Grundwasserneutralität wieder herzustellen mit ökologischen und ökonomisch vertretbaren Mitteln, wird vorgeschlagen, Abfallkunststoffe
a) zu inertisieren,
b) in Pelletform zu verfestigen, damit sie sand- und/oder kiesähnliche Verfülleigenschaften aufweisen und an der Oberfläche durch UV-schonende Wachstumsbodenmassen überlagert sind.

Hohlräume in Grundwassereinzugsgebieten werden mit inerten Grundstoffgranulaten versehen, wobei diese Granulate aus inertisierten Abfallkunststoffen hergestellt sind. Durch überlagerte Wachstumsböden passen sich die verfüllten Hohlräume und die Oberflächen dem Landschaftsgebilde an.

Es ist auch zweckdienlich, Aufbereitungsrückstände aus dem Sand- und/oder Kiesvorkommen mit einem neutralisierten Kunststoff zu mischen und zur Füllung des Grund- und/oder Süßwassergewinnungsgebietes als Füllmasse zu verwenden..

Mit wachsender Teufe bewirken die Strecken im Bergbau durch die abstrahlende Temperatur des Nebengesteins einen heißen Arbeitsplatz.

Um die Temperatur am Arbeitsplatz in Bergbaustrecken herabzusetzen und um auch die zugeführten Wetter nicht auf dem Weg zum Arbeitsplatz zu stark zu erhitzen, wird vielfach versucht, das angrenzende Gebirge durch Isolierstoffe so zu isolieren, daß durch den erzeugten Dämmwert eine geringere Abstrahlung von dem angrenzenden Gestein ermöglicht wird.

Die Isolierstoffe bestehen in der Regel aus Bindestoffen mit Isolierzusätzen.

Isolierzusätze sind sehr aufwendig in der Herstellung und somit teuer.

Um die Wertigkeit der Dämmwirkung heraufzusetzen und gleichzeitig eine preiswerte Lösung zu ermöglichen, wird vorgeschlagen, die zu verwendenden Abfallkunststoffe von Metallen zu befreien und den Kunststoff so zu zerkleinern, daß er eine Korngröße von unter 16 mm aufweist und gleichzeitig durch thermische Behandlung bakterizid wirkt, d.h. in den zu verwendenden Putz keine Bakterien einzuschleusen, die ein Abplatzen des Putzes bewirken könnten.

Ein Isolierputz für Grubenstrecken wird so erstellt, daß er Kunststoffzuschlagmengen aufweist, die eine Korngröße von kleiner 16 mm besitzen und steril sind.

Restkunststoffe, wie beispielsweise die innerhalb des Dualen Systems Deutschland recycleten Einwegverpackungen, werden zu einem Granulat verarbeitet, welches wiederum als Ausgangsstoff für Gebrauchsgegenstände aus Kunststoff oder aber auch als Zuschlag für Baustoffe verwendet werden kann.

Ferner enthält ein solches Kunststoffgranulat herkunftsbedingt metallische Verunreinigungen und hier insbesondere Aluminiumfolien, aus welchen sich bei der Verarbeitung als Baustoff mit alkalischen Bindemitteln Wasserstoff bildet.

Solche Kunststoffgranulate können, wie vorstehend erläutert, von mit sauren und/oder alkalischen Lösungen reagierenden Metallen befreit werden.

Das hier verwendete Verfahren nimmt dabei die sonst in den alkalisch angemachten Baustoffen ablaufende chemische Reaktion der amphoteren Metalle Aluminium und Zink mit den alkalischen Bindemitteln wie beispielsweise Kalk und/oder Zement voraus, indem ein bei der Kunststoffaufbereitung eingeschalteter Waschvorgang alkalisch durchgeführt wird.

Es hat sich gezeigt, daß dieser Reinigungsvorgang nicht notwendigerweise in einem Flüssigkeitsbad durchgeführt werden muß, sondern die alkalische Reinigung auch direkt während des Aufbereitungs- und Granulierprozesses ablaufen kann.

Hierbei wird den Kunststoffresten während des Durchlaufens der einzelnen Aufbereitungsstufen eine alkalische Komponente zugegeben, die die erforderliche Reaktion mit den Metallen bewirkt.

Dieses kann nun dadurch geschehen, daß bereits während des zu Anfang stattfindenden Zerkleinerungsvorgangs das Aufbereitungsgut mit einer verdünnten Lauge, beispielsweise Natronlauge oder Kalkmilch, besprüht wird, wonach dann innerhalb des weiteren Verlaufs des bekannten Verfahrens als Spülvorgang eine Berieselung mit Wasser stattfindet, wonach endlich der Kunststoff durch die während des abschließenden Granuliervorgangs erzeugte starke Eigenerwärmung auf über 100 Grad C getrocknet wird.

Eine andere Verfahrensvariante besteht darin, daß die zu Anfang zugemischte alkalische Komponente aus ungelöschtem oder gelöschtem festen Kalk besteht, welcher durch die befeuchtende Besprühung mit Wasser erst als alkalische Komponente wirksam wird, wobei bei Verwendung von ungelöschtem Kalk durch die auftretende Hydratationswärme eine Reaktionsbeschleunigung stattfindet.

Es ist auch denkbar, daß zur Reaktionsbeschleunigung zusätzliche Feuchtigkeit hierbei durch Sattdampf eingebracht wird.

Schließlich kann abhängig von der späteren Verwendung des Kunststoffgranulats - und hier wird insbesondere an den Einsatz als Baustoffzuschlag gedacht - auf einen abschliessenden Spülvorgang verzichtet werden, wobei dann die Reaktionsprodukte, welche vornehmlich aus hydratisierten Calcium-Aluminaten bestehen, als unschädliche Baustoffkomponente im Kunststoffgranulat verbleiben.

## Patentansprüche

1. Bau-, Versatz- bzw. Füllstoff, vorzugsweise zum Einsatz im untertägigen Bergbau, mit einem Kunststoffanteil, dadurch gekennzeichnet, daß als Kunststoffanteil Rest- bzw. Abfallkunststoff vorgesehen ist.

2. Bau-, Versatz- bzw. Füllstoff nach Anspruch 1, vorzugsweise für den Kali- und Salzbergbau, bei dem im Rest- bzw. Abfallkunststoff Ablauge aus einem Kali- und Salzbergwerk aufgenommen ist und der Bindemittel aus einer Rauchgasreinigungsanlage enthält.

3. Bau-, Versatz- bzw. Füllstoff nach Anspruch 2, der als Rest- bzw. Abfallkunststoff dochtfähigen Rest- bzw. Abfallkunststoff, z.B. Umhüllungswerkstoff von Kabeln ud.dgl., enthält.

4. Bau-, Versatz- bzw. Füllstoff nach Anspruch 2 oder 3, der als Bindemittel Asche aus Braunkohle- und/oder Müllverbrennungsanlagen enthält.

5. Verfahren zur Herstellung eines Bau-, Versatz- bzw. Füllstoffs gemäß einem der Ansprüche 2 bis 4, bei dem der Rest- bzw. Abfallkunststoff aufgeshreddert wird, bis die Ablauge aus dem Kali- und Salzbergwerk in ihm aufnehmbar ist, und mit der Ablauge und dem Bindemittel aus der Rauchgasreinigungsanlage zusammengeführt wird.

6. Bau-, Versatz- bzw. Füllstoff nach Anspruch 1, vorzugsweise für den Kali- und Salzbergbau, der als Rest- bzw. Abfallkunststoff geshreddertes Material aus einer Kraftfahrzeugentsorgungsanlage enthält und je 1000 1 Ablauge aus einem Kali- und Salzbergwerk mit ca. 200 bis 300 kg Kalk, ca. 600 bis 700 kg Filterasche aus Verbrennungsanlagen und ca. 200 bis 300 kg Zement gemischt wird.

7. Bau-, Versatz- bzw. Füllstoff nach Anspruch 6, der ein industrielles Rückstandsprodukt aufweist, das kein im physikalischen Sinne freies Wasser enthält.

8. Bau-, Versatz- bzw. Füllstoff nach Anspruch 7, bei dem das Rückstandsprodukt ein durch einen Calciumhydroxid (Ca(OH)2)-Überschuß gefällter Galvanikschlamm ist, dessen im physikalischen Sinne freies Wasser durch gebrannten Kalk gebunden ist.

9. Bau-, Versatz- bzw. Füllstoff nach Anspruch 1, der einen alkalischen Zuschlagstoff in einer - bezogen auf freisetzbare saure Schadstoffe - leicht überstöchiometrischen Menge enthält.

10. Bau-, Versatz- bzw. Füllstoff nach Anspruch 9, bei dem der alkalische Zuschlagstoff Calciumhydroxid und/oder alkalischer Zement ist.

11. Bau-, Versatz- bzw. Füllstoff nach Anspruch 1, bei dem der Rest- bzw. Abfallkunststoff chemisch inert und durch einen Magnesiabinder gebunden ist.

12. Bau-, Versatz- bzw. Füllstoff nach Anspruch 11, bei dem der Rest- bzw. Abfallkunststoff aus recycleten Kunststoffgranalien besteht.

13. Bau-, Versatz- bzw. Füllstoff nach einem der Ansprüche 11 oder 12, bei dem der Magnesiabinder aus Magnesiumchlorid und Magnesiumoxid oder aus Magnesiumsulfat und Magnesiumoxid besteht.

14. Bau-, Versatz- bzw. Füllstoff nach einem der Ansprüche 11 bis 13, dem ein quellfähiger kaolinitischer Ton zugesetzt wird.

15. Bau-, Versatz- bzw. Füllstoff nach Anspruch 1, bei dem der Rest- bzw. Abfallkunststoff aus recycleten Kunststoffgranalien besteht und der als Bindemittel Zement und als Zusatzstoff einen quellfähigen, vorwiegend kaolinitischen Ton enthält.

16. Bau-, Versatz- bzw. Füllstoff nach Anspruch 15, bei dem die Kunststoffgranalien eine Korngröße kleiner 1 mm besitzen.

17. Bau-, Versatz- bzw. Füllstoff, der kohlenstoffreiche Schlacken aus Verbrennungsanlagen enthält, dadurch gekennzeichnet, daß die Schlacken in im Kali- und Salzbergbau anfallenden chloridreichen Rückständen eingebunden sind.

18. Bau-, Versatz- bzw. Füllstoff nach Anspruch 17, der puzzolanische Aschen und/oder Zement enthält.

19. Verfahren zur Entsorgung kohlenstoffreicher Schlacken aus Verbrennungsanlagen, dadurch gekennzeichnet, daß die Schlacken in im Kali- und Salzbergbau anfallenden chloridreichen Rückständen eingebunden werden.

20. Verfahren nach Anspruch 19, bei dem puzzolanische Asche und/oder Zement zugesetzt wird bzw. werden.

21. Verfahren zur transportfähigen Ausgestaltung als Teilkomponente eines vorzugsweise nach einem der Ansprüche 1 bis 4 oder 6 bis 16 ausgestalteten Bau-, Versatz- bzw. Füllstoffs vorgesehener Rest- bzw. Abfallkunststoffe, dadurch gekennzeichnet, daß die teilweise verunreinigt anfallenden Rest- bzw. Abfallkunststoffe aufgemahlen und mit bekannten chemischen Mitteln behandelt werden, bis sie gärungsunfähig sind und bis ihre statische Aufladung beseitigt ist.

22. Verfahren nach Anspruch 21, bei dem als chemisches Behandlungsmittel Kalk mit geringer Oberflächenfeuchte eingesetzt wird.

23. Verfahren zur Herstellung eines vorzugsweise nach einem der Ansprüche 1 bis 4 oder 6 bis 16 ausgestalteten Bau-, Versatz- bzw. Füllstoffes, dadurch gekennzeichnet, daß während des Mischvorgangs die Reaktionstemperatur und -dauer so aufeinander abgestimmt werden, daß mit Abschluß des Mischvorgangs gasförmige Nebenprodukte, die durch Reaktionen von Verunreinigungen mit den Baustoffkomponenten entstehen, vollständig ausgetrieben sind.

24. Verfahren nach Anspruch 23, bei dem die Temperatureinstellung in einem heizbaren Mischgefäß stattfindet.

25. Verfahren nach Anspruch 23 oder 24, bei dem Anmachwasser vorher erwärmt wird.

26. Verfahren zur Behandlung von Rest- bzw. Abfallkunststoffen, die zum Einsatz als Teilkomponente eines vorzugsweise nach einem der Ansprüche 1 bis 4 oder 6 bis 16 ausgestalteten Bau-, Versatz- bzw. Füllstoffs vorgesehen sind, dadurch gekennzeichnet, daß die Rest- bzw. Abfallkunststoffe in einer Waschflüssigkeit gewaschen werden, deren pH-Wert größer als 12 ist.

27. Verfahren nach Anspruch 26, bei dem als Waschflüssigkeit verdünnte Natronlauge oder eine wässrige Suspension aus Calciumhydroxid eingesetzt wird.

28. Verfahren nach Anspruch 26 oder 27, bei dem der Waschvorgang in einem oben offenen Gefäß vorgenommen wird, wobei die Rest- bzw. Abfallkunststoffe auf der einen Seite in das Gefäß eingebracht und auf der gegenüberliegenden Seite nach einer dem Verfahren angemessenen Verweilzeit kontinuierlich ausgetragen werden.

29. Verfahren nach einem der Ansprüche 25 bis 27, bei dem die Rest- bzw. Abfallkunststoffe kontinuierlich über ein Siebband gefördert und dabei durch Berieselung mit der Waschflüssigkeit gereinigt werden, wobei die Waschflüssigkeit vorzugsweise im Umlauf wiederverwendet wird.

30. Verfahren nach einem der Ansprüche 26 bis 29, das bei erhöhter Temperatur, vorzugsweise bei 60 bis 90 Grad C, durchgeführt wird, wobei die unmittelbar nach der Herstellung von Kunststoffgranulat in diesem vorhandene Eigenwärme genutzt wird, indem das noch heiße Kunststoffgranulat in die Waschlösung eingebracht wird.

31. Verfahren nach einem der Ansprüche 26 bis 29, bei dem gemahlenes Kunststoffgranulat vor dem Waschvorgang einer nach dem Prinzip der Schwertrübeflüssigkeit arbeitenden Zentrifuge zugeführt wird, so daß Aluminiumpartikel aus dem gemahlenen Kunststoffgranulat entfernt werden.

32. Bindemittel, vorzugsweise für einen Bau-, Versatz- bzw. Füllstoff nach einem der Ansprüche 1 bis 4 oder 6 bis 16, das eine in einem Kali- und Salzbergwerk anfallende, magnesiumchloridhaltige Ablauge enthält, dadurch gekennzeichnet, daß das Bindemittel Magnesiumoxid enthält.

33. Bau-, Versatz- bzw. Füllstoff, mit einem Bindemittel nach Anspruch 32, dadurch gekennzeichnet, daß er ein industrielles Rückstandsprodukt aufweist, das kein im physikalischen Sinne freies Wasser enthält.

34. Bau-, Versatz- bzw. Füllstoff nach Anspruch 33, bei dem das Rückstandsprodukt ein Galvanikschlamm ist, der durch einen Überschuß von Calciumhydroxid (Ca(OH)2) gefällt und dessen im physikalischen Sinne freies Wasser zuvor durch gebrannten Kalk (CaO) gebunden worden ist.

35. Bau-, Versatz- bzw. Füllstoff nach Anspruch 33, bei dem das Rückstandsprodukt geshreddertes Material aus der Kraftfahrzeugentsorgung ist.

36. Bau-, Versatz- bzw. Füllstoff nach Anspruch 33, bei dem das Rückstandsprodukt granulierte, nicht recyclingfähige Rest- bzw. Abfallkunststoffe sind.

37. Bau-, Versatz- bzw. Füllstoff nach Anspruch 33, bei dem das Rückstandsprodukt wasserfreie Reststoffe aus einer Müllverbrennungsanlage sind.

38. Verfahren zur Herstellung eines Bindemittels nach Anspruch 32, bei dem einer in einem Kali- und Salzbergwerk anfallenden, magnesiumchloridhaltigen Ablauge Magnesiumoxid zugesetzt wird.

39. Verfahren zur Herstellung einer Kunststoffkomponente eines vorzugsweise nach einem der Ansprüche 1 bis 4, 6 bis 16 oder 33 bis 37 ausgestalteten Bau-, Versatz- bzw. Füllstoffes, dadurch gekennzeichnet, daß Rest- bzw. Abfallkunst stoffe unter Einfluß von Wärme inertisiert und gleichzeitig aufgeschäumt werden.

40. Verfahren nach Anspruch 39, das in einem Heißextruder durchgeführt wird.

41. Verfahren nach Anspruch 39 oder 40, bei dem Extruderstücke kubisch ausgebildet werden.

42. Verfahren nach Anspruch 39 oder 40, bei dem Extruderstücke nadelartig ausgebildet werden.

43. Verfahren nach Anspruch 39 oder 40, bei dem die Rest- bzw. Abfallkunststoffe durch Aufschäummittel und/oder durch Einblasen von Luft und/oder gewünschtem Gas mit einer porösen Hohlkörperform ausgestaltet werden.

44. Verfahren zur Entsorgung von Rest- bzw. Abfallkunststoffen, dadurch gekennzeichnet, daß die Rest- bzw. Abfallkunststoffe inertisiert und pelletisiert bzw. granuliert und dann zur Verfüllung wasserführender Hohlräume eingesetzt werden.

45. Verfahren nach Anspruch 44, bei dem den Rest- bzw. Abfallkunststoffen qualitativ minderwertige Sande aus Böschungsbereichen oder Aufbereitungsanlagen zugemischt werden.

46. Verfahren nach Anspruch 44 oder 45, bei dem auf die Oberfläche der ggf. die Sande oder einen anderen neutralen Stoff enthaltenden Rest- bzw. Abfallkunststoffe Wachstumsboden aufgetragen wird.

47. Baustoff nach Anspruch 1, dessen Rest- bzw. Abfallkunststoffe von Metallen befreit und auf Korngrößen von unter 16 mm zerkleinert sind und durch thermische Behandlung bakterizid wirken.

48. Verfahren zum Aufbereiten und Reinigen als Teilkomponente eines vorzugsweise gemäß einem der Ansprüche 1 bis 4, 6 bis 16, 33 bis 37 oder 48 ausgestalteten Bau-, Versatz- bzw. Füllstoffes vorgesehener Rest- bzw. Abfallkunststoffe, bei dem die Rest- bzw. Abfallkunststoffe zu Kunststoffgranulat granuliert werden, dadurch gekennzeichnet, daß den Rest- bzw. Abfallkunststoffen vor und/oder während des Aufbereitungs- und Granuliervorgangs eine alkalische Komponente zugesetzt wird, durch die, in Verbindung mit ebenfalls vor und/oder während des Aufbereitungs- und Granuliervorgangs den Rest- bzw. Abfallkunststoffen zugesetzter Feuchtigkeit, amphotere metallische Verunreinigungen aufgelöst werden.

49. Verfahren nach Anspruch 48, bei dem als alkalische Komponente verdünnte Natriumlauge oder Kalkmilch oder festes pulverförmiges Calciumhydroxid oder festes pulverförmiges Calciumoxid eingesetzt wird.

50. Verfahren nach Anspruch 48 oder 49, bei dem nach der während des Aufbereitungs- und Granuliervorgangs erfolgenden intensiven Vermischung des Kunststoffgranulats mit der alkalischen Komponente heißer Sattdampf eingebracht wird.
